# EUROPÄISCHE PATENTSCHRIFT

(11) **EP 0 553 127 B1**
(45) Veröffentlichungstag und Bekanntmachung des Hinweises auf die Patenterteilung: **08.01.1997**
(21) Anmeldenummer: 91917411.0
(22) Anmeldetag: 07.10.1991
(51) Int. Cl.: C08G 18/36, H01B 3/30

(54) **BRÖSELMASSE AUF POLYURETHANBASIS**
POLYURETHANE-BASED FRIABLE COMPOUND
MATIERE FRIABLE A BASE DE POLYURETHANE

(30) Priorität: 16.10.1990 DE 4032843
(43) Veröffentlichungstag der Anmeldung: 04.08.1993
(73) Patentinhaber: Henkel Kommanditgesellschaft auf Aktien, 40191 Düsseldorf (DE)
(72) Erfinder: DAUTE, Peter, D-4300 Essen (DE); GRÜTZMACHER, Roland, D-5603 Wülfrath (DE); HÖFER, Rainer, D-4000 Düsseldorf 30 (DE); STOLL, Gerhard, D-4052 Korschenbroich (DE)
(86) Internationale Anmeldenummer: EP9101899
(87) Internationale Veröffentlichungsnummer: WO9207017

(56) Entgegenhaltungen:
- EP-A- 0 111 626
- EP-A- 0 152 585
- EP-A- 0 259 722
- US-A- 4 603 188

## Beschreibung

Die Erfindung betrifft eine Bröselmasse auf Polyurethanbasis, hergestellt aus einer Polyolkomponente und einer Isocyanatkomponente.

Bröselmassen werden auf vielen Gebieten der Technik eingesetzt, wenn es gilt, ein Gehäuse, ein Rohr oder ähnliches an den offenen Enden so zu verschließen, daß Feuchte oder Wasser in das Innere nicht eindringen kann. Dieses gilt insbesondere für Kabel zur Übertragung von Informationen, beispielsweise in der Nachrichtentechnik sowie verschiedenartige Anwendungsbereiche der Elektroindustrie.

Kabel der Nachrichtentechnik bestehen aus einer Vielzahl von elektrisch leitenden Adern, die gebündelt sind und bei denen mehrere solcher Bündel in einer äußeren Schutzumhüllung untergebracht sind. Für die Verbindung zweier solcher Kabel oder auch für das Verbinden unterschiedlich aufgebauter Kabel ist es erforderlich, diese Aderbündel aufzuspleißen und mit den Adern des anderen Kabelstücks zu verbinden. Die einzelnen so verbundenen Adern müssen gegeneinander wieder isoliert werden, so daß ein räumlich zum Teil wesentlich größeres Gebilde entsteht. Da die Isolation der einzelnen Adern geöffnet wurde, muß dieses Gebilde gegen das Eindringen von Feuchte oder Wasser geschützt werden; dieses geschieht durch sogenannte Kabelgarnituren als Verbindungsstücke, die aus einer Kabelmuffe und darin untergebrachtem Kunststoffmaterial bestehen, wobei dieses Kunststoffmaterial wegen der Anforderung, möglichst kerbanfällig zu sein, als Bröselmasse bezeichnet wird. Derartige Bröselmassen können in einfacher Weise ohne Anwendung von Werkzeugen von Hand entfernt werden. Sie müssen bei z.B. Verwendung in Kabelgarnituren einen möglichst hohen Durchgangswiderstand aufweisen und ferner soll ihre sogenannte Topfzeit bei der Verarbeitung lang und gegebenenfalls durch Zugabe von Katalysatoren verkürzbar sein.

Im Zuge der Bemühungen, petrochemische Produkte durch nachwachsende Rohstoffe zu ersetzen, ist es wünschenswert, auch Bröselmassen auf dieser Basis zur Verfügung zu stellen. Schließlich ist es wünschenswert, daß eine Bröselmasse nach Möglichkeit ein homogenes Produkt ist, das heißt, ein einheitliches Produkt ohne weitere Zusatzstoffe.

Die Aufgabe wird erfindungsgemäß durch eine lösungsmittel- und weichmacherfreie Bröselmasse aus Polyolen auf der Basis modifizierter Triglyceride und einer Isocyanatkomponente gelöst.

Gegenstand der Erfindung ist demnach eine lösungsmittel- und weichmacherfreie Bröselmasse mit einer Shore A-Härte von unter 40 auf Polyurethanbasis aus einer Polyolkomponente und einer Isocyanatkomponente, wobei die Polyolkomponente modifizierte Triglyceride sind, die im Mittel sowohl Epoxidgruppen als auch sekundäre Hydroxylgruppen sowie Ethergruppen aufweisen und die durch partielle Ringöffnung epoxierter Triglyceride eines wenigstens anteilsweise olefinisch ungesättigte Fettsäure enthaltenden Fettsäuregemisches mit ein- oder mehrwertigen Alkoholen herstellbar sind, und die Isocyanatkomponente mehrfunktionelle aromatische und/oder aliphatische Isocyanate sind und wobei das Äquivalenzverhältnis von OH-Gruppen zu NCO-Gruppen zur Herstellung der Bröselmasse im Bereich von 1: 0,1 bis 1 : 1,5 liegt.

Die erfindungsgemäßen Bröselmassen bestehen demnach aus nur einem technischen Produkt, dessen Polyolkomponente aus nachwachsenden Rohstoffen gewonnen wird. Sie besitzen hohe Lagerstabilität und hohen elektrischen Widerstand, verbunden mit ausgezeichneter Bröselfähigkeit. Darüber hinaus sind sie lösungsmittelfrei wie auch weichmacherfrei, so daß Entmischung oder Auswanderung solcher Zusätze mit den üblicherweise damit verbundenen Nachteilen nicht auftreten. Überraschenderweise sind diese Bröselmassen zudem völlig transparent: Dieser Umstand erlaubt, die in die erfindungsgemäße Bröselmasse z.B. eingebetteten elektrischen Verbindungen etc. visuell und damit zerstörungsfrei zu überprüfen, wodurch die Auffindung von reparaturbedürftigen Deffekten erheblich erleichtert und gegebenenfalls unnötige Arbeit und Material-vergeudung vermieden werden können.

Als erfindungsgemäße Polyolkomponente sind modifizierte Triglyceride geeignet, wie sie beispielsweise in der DE-A1 32 46 612 beschrieben sind, und die durch partielle Ringöffnung epoxidierter Triglyceride eines wenigstens anteilsweise olefinisch ungesättigte Fettsäuren enthaltenden Fettsäuregemisches mit ein- oder mehrwertigen Alkoholen herstellbar sind.

Als erfindungsgemäße Isocyanatkomponente sind im Prinzip alle üblichen mehrfunktionellen aromatischen und aliphatischen Isocyanate geeignet, wie beispielsweise auch oligomere oder polymere Isocyanatverbindungen, wobei als geeignete Beispiele HDI-Trimer (Tris-6-Isocyanathexyl-isocyanurat), Polyisocyanat (4,4Diphenylmethandiisocyanat (MDI)) und HDI-Biuret (1,3,5Tris(6-Isocyanat-hexyl)-Biuret) genannt seien, wobei insbesondere nichtgiftige und nicht kennzeichnungspflichtige Verbindungen bevorzugt sind.

Das OH/NCO-Äquivalenzverhältnis beträgt 1:0,1 bis 1:1,5 insbesondere 1:0,4 bis 1:1,25.

Der Durchgangswiderstand der erfindungsgemäßen Bröselmassen liegt bei 10¹⁰ Ohm x cm und höher. Die Durchgangswiderstände werden nach DIN 53482/-VDI 0303, Teil 3, bestimmt.

Die Härte der erfindungsgemäßen Bröselmasse auf Polyurethanbasis kann bedarfsweise über weite Bereiche gezielt über die Epoxidzahl bzw. die OH-Zahl des ringgeöffneten epoxidierten Triglycerids eingestellt werden; so führt eine Polyolkomponente mit hoher Epoxidzahl und entsprechend kleiner OH-Zahl zu relativ weichen und solche mit niedriger Epoxidzahl und entsprechend hoher OH-Zahl zu relativ harten, d.h. stark vernetzten Bröselmassen.

Die erfindungsgemäß einsetzbaren Polyole werden wie folgt hergestellt:

### Beispiel 1: Herstellung von Polyol I

28.2 kg Methanol und 0.444 kg Schwefelsäure wurden in einem Rührkessel vorgelegt und unter Rühren auf ca. 50°C erhitzt. Dananch wurden 103.8 kg Sojaölepoxid (Ep.-O = 6.8%) zugegeben und die Temperatur langsam bis zum Rückfluß des Methanols (ca. 65.C) erhöht. Nach beendeter Zugabe wurde der Epoxidwert der Reaktionsmischung während der weiteren Reaktion verfolgt. Bei einem Wert von 2.6% Ep.-O im Reaktionsgemisch wurde die Katalysatorschwefelsäure durch Zugabe von ca. 0.444 kg Diethylethanolamin neutralisiert (pH-Wert-Kontrolle, pH = 8-9) und das überschüssige Methanol im Vakuum abdestilliert. Man erhält so ca. 110 kg einer gelben, klaren Flüssigkeit (Restepoxidgehalt 3.0%).

### Beispiel 2: Herstellung von Polyol II

Analog Beispiel 1 wurden 3530 g Sojaölepoxid mit 960 g Methanol umgesetzt. Bei einem Epoxidwert von 3.9 % Ep.-O im Reaktionsgemisch wurde die Katalysatorschwefelsäure mit Diethylethanolamin neutralisiert und das überschüssige Methanol abdestilliert. Das Produkt (3600 g) ist eine gelbe, klare Flüssigkeit (Restepoxidgehalt 4.5%) .

### Beispiel 3: Herstellung von Polyol III

Analog Beispiel 1 wurden 400 kg Sojaölepoxid mit 110 kg Methanol umgesetzt. Bei einem Epoxidwert von 4.4 % Ep.-O im Reaktionsgemisch wurde die Katalysatorschwefelsäure mit Diethylethanolamin neutralisiert und das überschüssige Methanol abdestilliert. Das Produkt (406 kg) ist eine gelbe, klare Flüssigkeit (Restepoxidgehalt 5.3%).

In den folgenden Tabellen 1a und 1b werden einzelne Daten zur Herstellung bzw. der Eigenschaften der erfindungsgemäßen vollständig transparenten Bröselmassen wiedergegeben.

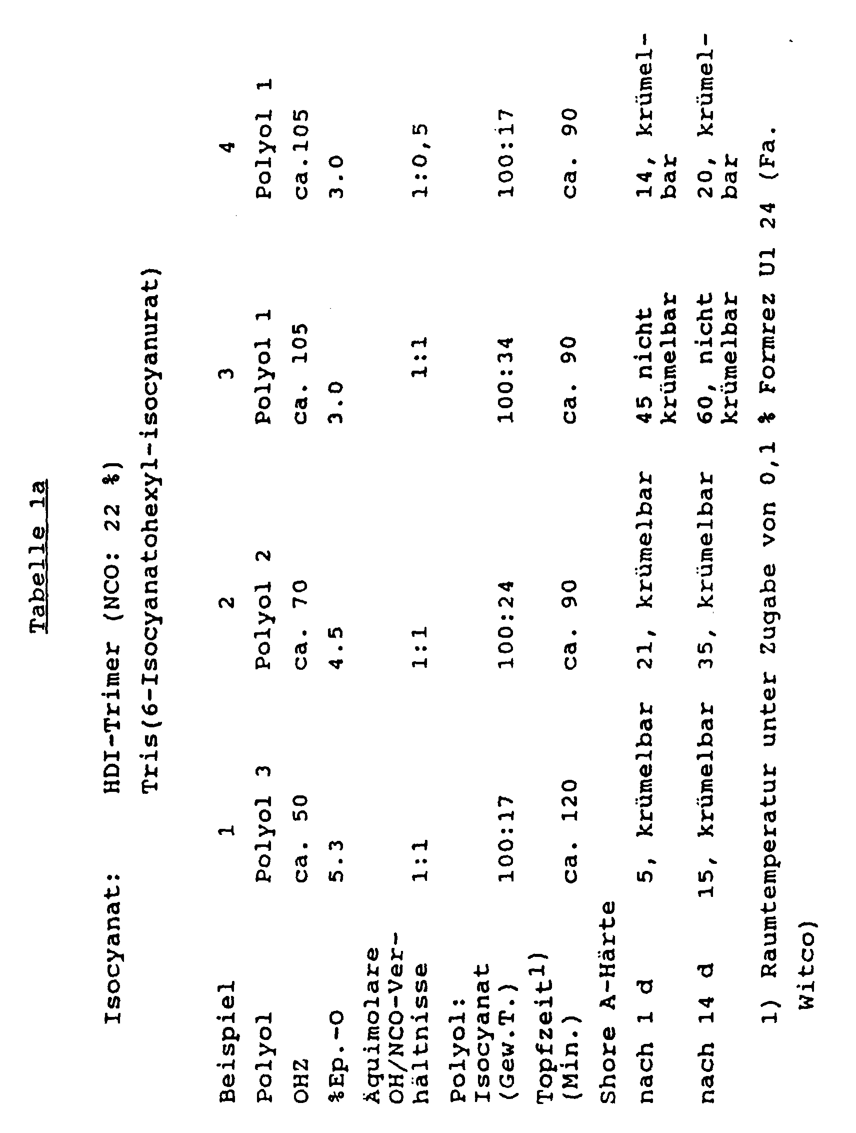

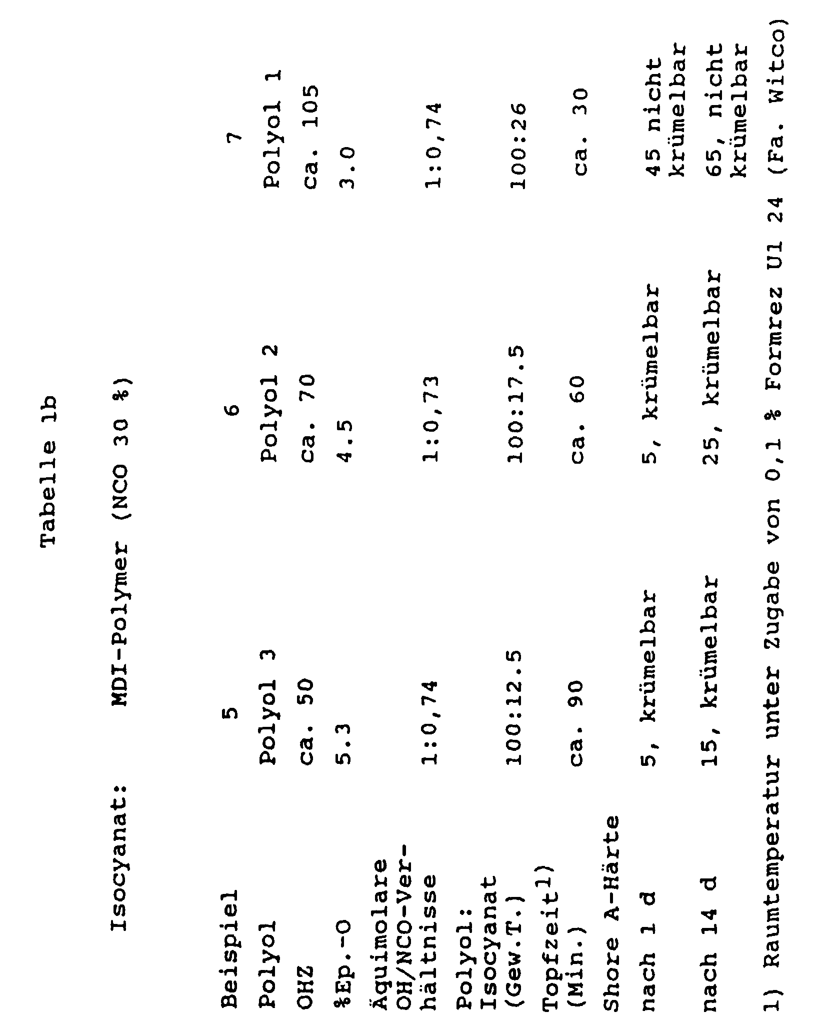

Aus den Tabellen 1a und 1b ergibt sich, daß die Beispiele 3 und 7 Massen betreffen, die als erfindungsgemäße Bröselmassen nicht geeignet sind, wobei dieses aus den Werten für die Shore A-Härte hervorgeht, wobei im allgemeinen davon auszugehen ist, daß Massen mit einem Wert von etwa 40 und höher zu erfindungsgemäß nicht befriedigenden Produkten führen.

In den folgenden Tabellen 2 und 3 werden weitere Daten zu den Ausgangsstoffen und den Eigenschaften der erhaltenen Massen wiedergegeben. Die in Tabelle 2 aufgeführten Polyole sind Sojapolyole mit etwa 3 %, 4,5 % und 5,3 % Epoxidsauerstoff gemäß DE-A1 33 46 612. Diese Sojapolyole wurden mit Isocyanat in unterschiedlichen äquimolaren OH-NCO-Verhältnissen vergossen und die elektrischen Durchgangswiderstände gemessen.

Bei Untervernetzung mit Isocyanat sanken die elektrischen Werte bei steigender Klebrigkeit der erhaltenen Massen.

Aus Tabelle 3 ergibt sich, daß erwünschte Krümelbarkeit, gute elektrische Eigenschaften und geeignete geringe Klebrigkeit bei Verwendung von dem Sojapolyol Polyol 3 OHZ 50/Epoxidsauerstoff 5,3 % und dem Sojapolyol Polyol 2 OHZ 70/Epoxidsauerstoff 4,7 % nach äquimolarer Vernetzung mit einem HDI-Trimerisat erhalten wurden.

Die Durchhärtung der erhaltenen Massen wurde durch Zusatz des Katalysators Formrez UL 24 beschleunigt.

Der Zusatz von Sojaölepoxid (Edenol D 81 der Fa. Henkel KGaA) zu Polyol 1 führte zu Ausschwitzen des Weichmachers nach dem Vergießen mit dem HDI-Trimerisat, so daß kein befriedigendes Produkt erhalten wurde.

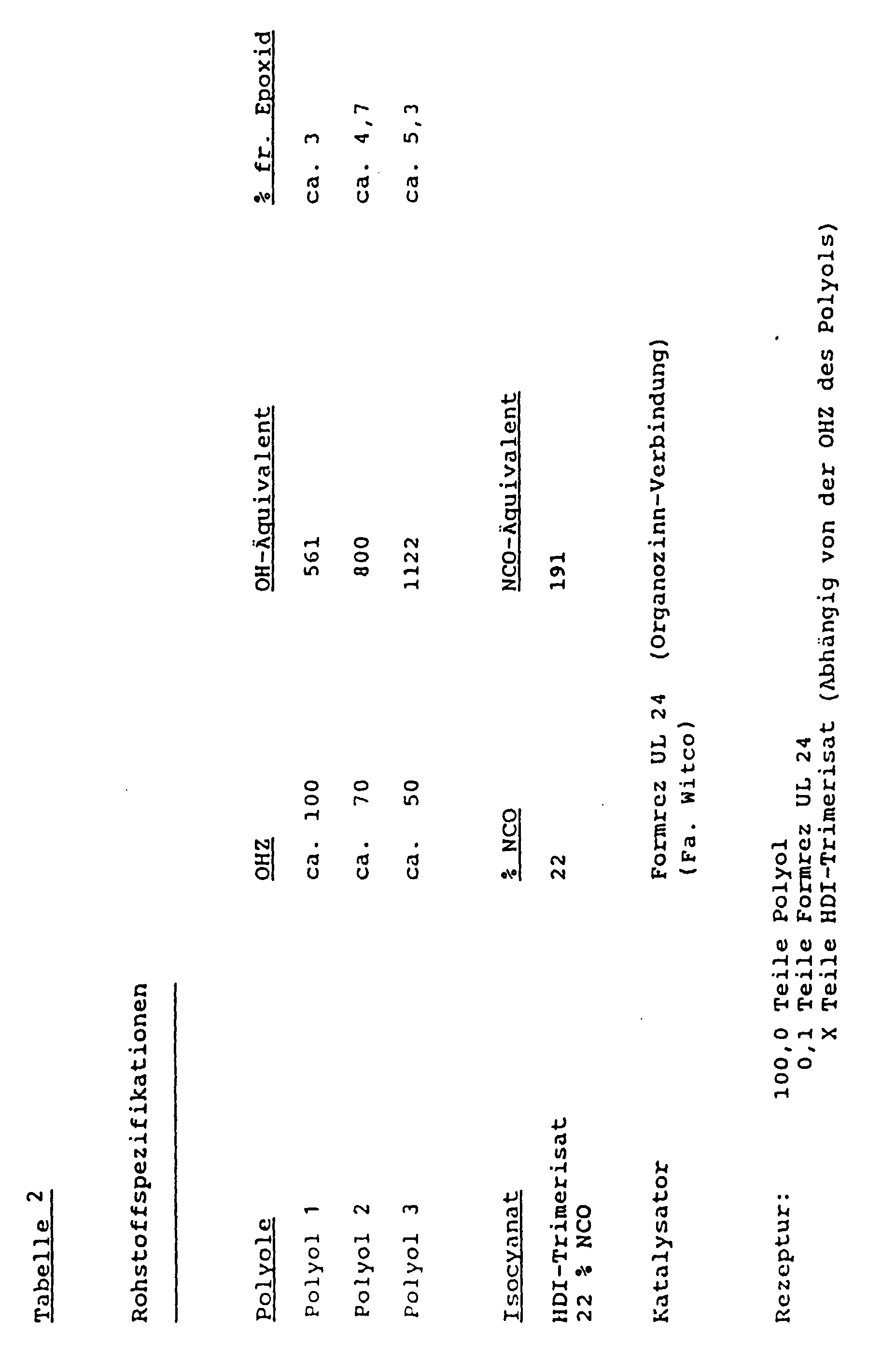

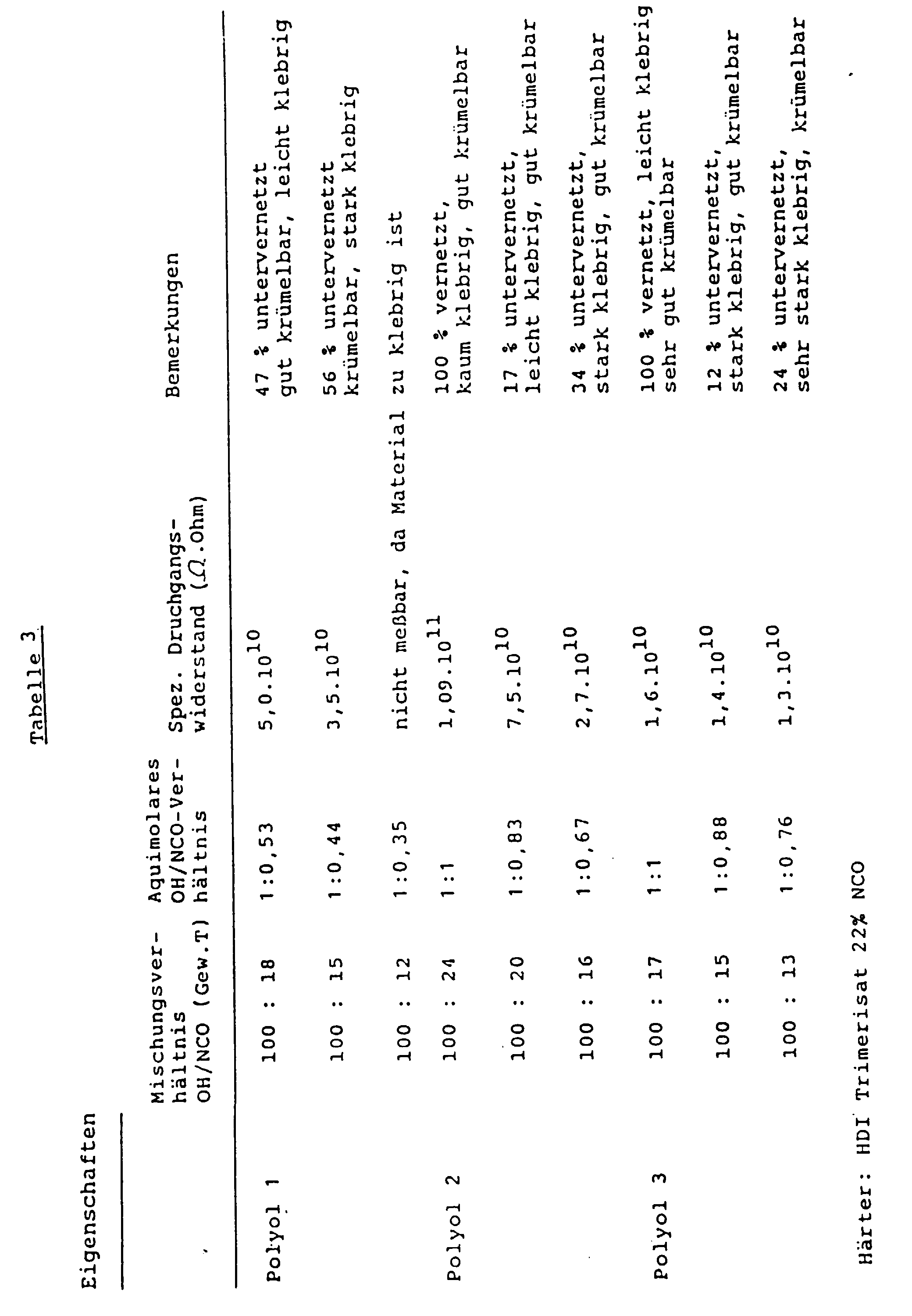

## Patentansprüche

1. Lösungsmittel- und weichmacherfreie Bröselmasse mit einer Shore A-Härte von unter 40 auf Polyurethanbasis aus einer Polyolkomponente und einer Isocyanatkomponente, wobei die Polyolkomponente modifizierte Triglyceride sind, die im Mittel sowohl Epoxidgruppen als auch sekundäre Hydroxylgruppen sowie Ethergruppen aufweisen und die durch partielle Ringöffnung epoxidierter Triglyceride eines wenigstens anteilsweise olefinisch ungesättigte Fettsäure enthaltenden Fettsäuregemisches mit ein- oder mehrwertigen Alkoholen herstellbar sind, und die Isocyantkomponente mehrfunktionelle aromatische und/oder aliphatische Isocyanate sind und wobei das Äquivalenzverhältnis von OH-Gruppen zu NCO-Gruppen zur Herstellung der Bröselmasse im Bereich von 1 : 0,1 bis 1 : 1,5 liegt.

2. Bröselmasse nach Anspruch 1, dadurch gekennzeichnet, daß das Äquivalenzverhältnis 1 : 0,4 bis 1 : 1,25 beträgt.

3. Bröselmasse nach einem der vorhergehenden Ansprüche, dadurch gekennzeichnet, daß der Durchgangswiderstand (gemäß DIN 53482/-VDI 0303) im Bereich von 10¹⁰ Ohm x cm und höher liegt.

## Claims

1. A polyurethane-based friable sealing compound which is free of solvent and plasticiser and which has a shore - A - hardness below 40 and which consists of a polyol component and an isocyanate component and wherin the polyol component is selected from modified triglyceride containing on average both epoxide groups and secondary hydroxyl group and also ether groups and which can be prepared by partial ring opening of epoxidized triglycerides based on a fatty acid mixture which consists of at least partly unsaturated fatty acids with mono- or polyfunctional alcohols and the isocyanate compound is selected from polyfunctional aromatic and/or aliphatic isocyanates and wherin the equivalent ratio of OH groups to NCO groups for the production of the friable sealing compound is from 1:0,1 to 1:1.5.

2. A compound as claimed in claim 1, characterized in that the equivalent ratio of OH groups to NCO groups is from 1:0,4 to 1:1,25.

3. A compound as claimed in one of the previous claims, characterized in that the volume resistance - determined in accordance with DIN 53482/VDI 0303 - is 10¹⁰ ohm x cm or higher.

## Revendications

1. Masse friable exempte de solvant et de plastifiant possédant une dureté Shore-A inférieure à 40, à base de polyuréthane constitué d'un composant polyol et d'un composant isocyanate, le composant polyol étant constitué de triglycérides modifiés, qui présentent en moyenne aussi bien des groupes époxy que des groupes hydroxyle secondaires, ainsi que des groupes éther et qui sont obtenables par ouverture partielle de cycle de triglycéride époxydés d'un mélange d'acides gras contenant un acide gras au moins partiellement à insaturation oléfinique avec des alcools mono- ou polyvalents, et le composant isocyanate étant constitué d'isocyanates aromatiques et/ou aliphatiques polyfonctionnels, et le rapport d'équivalence entre les groupes OH et les groupes NCO pour la fabrication de la masse friable se situant dans l'intervalle de 1:0,1 à 1:1,5.

2. Masse friable selon la revendication 1, caractérisée en ce que le rapport d'équivalence atteint 1:0,4 à 1:1,25.

3. Masse friable selon une des revendications qui précèdent, caractérisée en ce que la résistance intérieure (selon DIN 53482/-VDI 0303) est égale ou supérieure à 10¹⁰ Ohm x cm.
